# EUROPEAN PATENT SPECIFICATION

(11) **EP 4 524 457 B1**
(45) Date of publication and mention of the grant of the patent: **01.07.2026**
(21) Application number: 23306512.7
(22) Date of filing: 12.09.2023
(51) Int. Cl.: F17C 13/12

(54) **SAFETY VALVE FOR A STORAGE TANK STORING DIHYDROGEN**
SICHERHEITSVENTIL FÜR EINEN SPEICHERTANK MIT DIHYDROGENSPEICHERUNG
SOUPAPE DE SÉCURITÉ POUR RÉSERVOIR DE STOCKAGE DE DIHYDROGÈNE

(43) Date of publication of application: 19.03.2025
(73) Proprietor: ALSTOM Transport SA, 93400 St-Ouen sur Seine (FR)
(72) Inventor: OBERT, Jérémie, 78510 TRIEL SUR SEINE (FR)
(74) Representative: Plasseraud IP

(56) References cited:
- EP-B1- 1 295 056
- CN-U- 215 929 214
- DE-A1- 102020 120 727
- DE-A1- 102020 207 261
- JP-B2- 4 873 156
- US-B2- 8 550 105

## Description

The present invention relates to a safety valve for a storage tank able to store dihydrogen, the safety valve comprising : a valve body ; an inner chamber, formed in the valve body ; a gas inlet and a gas exhaust outlet, opening in the inner chamber ; and a plug, inserted in the gas exhaust outlet ; the plug being configured for being ejected from the gas exhaust outlet in case of an over-pressure and/or of an over-temperature in the inner chamber.

The requirement of safety is of outmost importance in the field of transportation, and this requirement is even more stringent with transport vehicles storing on board inflammable gases.

In particular, vehicles are intended to transport gaseous hydrogen, or to store on board compressed gaseous hydrogen to be used as a propeller, such as hydrogen-propelled trains. In such cases, the onset of a fire or of an explosion on board may result in very dangerous conditions which need to be properly and timely faced.

To this end, such vehicles are usually provided with a safety system for the dihydrogen tanks. Each tank storage containing gaseous hydrogen can be equipped with a thermally activated pressure relief device (TPRD). The TPRD can also be installed onto the piping of the connected tanks.

The TPRD is configured to prevent the rupture or explosion of the storage tank(s), in case of internal overpressure and/or over-temperature. For example, the activation of a TPRD allows an amount of gaseous hydrogen to be released from the tank so as to lower the internal pressure.

Such a safety system is disclosed in document EP3896329A1, in the name of the Applicant. The document EP1295056 B1 discloses a safety valve for a storage tank.

However, the activation of a TPRD in the vehicle may imply local hazardous conditions on board of said vehicle. Therefore, it is useful for the safety of the vehicle that the activation of a TPRD is detected.

For this purpose, the invention relates to a safety valve of the aforementioned type, according to the features of claim 1

According to a preferred embodiment, the detection device also comprises a compression spring extending between a first and a second ends, fixed respectively to the support and to the contacting element; and in the deactivated conformation of the detection device, the compression spring is in a compressed state ; and in the activated conformation of the detection device, the compression spring is in a relaxed state.

The invention also relates to a storage tank configured for storing dihydrogen, said storage tank comprising a safety valve as described above.

The invention also relates to a storage tank system, comprising : a storage tank as described above ; and at least one pipe, the gas inlet of the safety valve of the storage tank being connected to said at least one pipe.

The invention also relates to a safety system for a transport vehicle containing at least one storage tank for storing dihydrogen, the safety system comprising : at least one safety valve as described above ; and a monitoring device, the detection device of the at least one safety valve being connected to the monitoring device.

According to a preferred embodiment, the safety system also comprises at least one pipe coupled to the at least one safety valve, the gas inlet of said safety valve being connected to said pipe.

The invention also relates to a transport vehicle comprising a safety system as described above.

According to a preferred embodiment of the transport vehicle, the monitoring device of the safety system memorizes information regarding a location of the at least one safety valve in the transport vehicle.

The invention will be easier to understand in view of the following description, provided solely as an example, and with reference to the appended drawings, wherein :
- Figure 1 is a detailed, schematic, side view of a storage tank according to an embodiment of the invention, comprising a safety valve in a first configuration ; and
- Figure 2 is a detailed, schematic view of a safety system according to an embodiment of the invention, comprising the safety valve of Figure 1 in a second configuration.

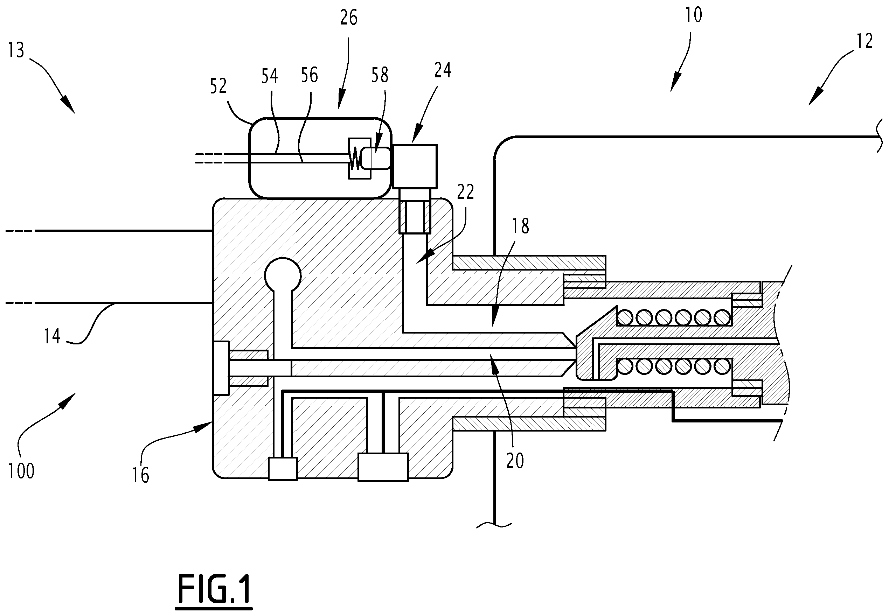

Figure 1 shows a safety valve 10 according to an embodiment of the invention. The safety valve 10 is part of a storage tank 12. The storage tank 12 is configured for storing dihydrogen (H₂).

More precisely, Figure 1 shows a storage tank system 13 according to the invention. The storage tank system 13 comprises one or more storage tanks 12 and a piping system. The piping system comprises at least a pipe 14.

In a preferred embodiment, the storage tank system 13 is situated on board of a transport vehicle 100.

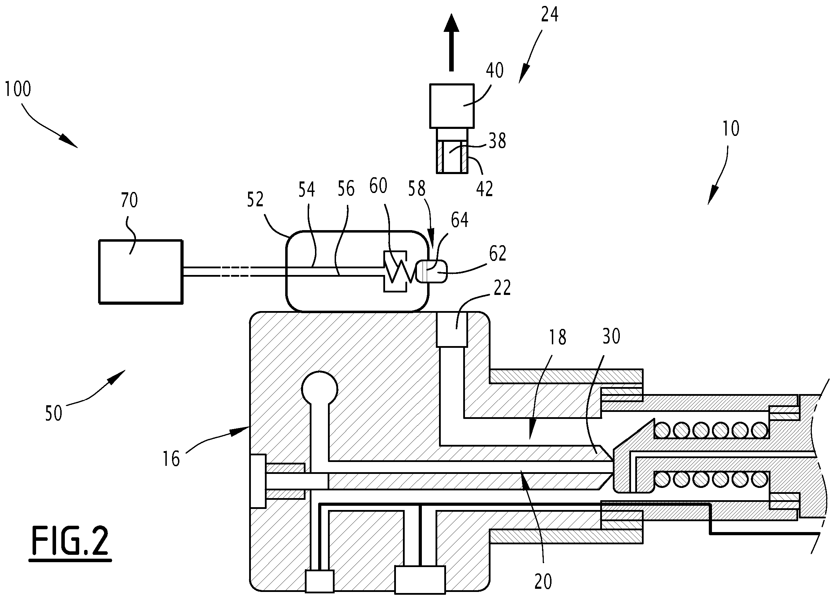

The safety valve 10, also shown on Figure 2, comprises : a valve body 16 ; an inner chamber 18 ; a gas inlet 20 ; a gas exhaust outlet 22 ; a plug 24 ; and a detection device 26. The gas inlet 20 is connected to the pipe 14.

In the embodiment of Figures 1 and 2, the safety valve 10 also comprises a valve seat 30.

The inner chamber 18 is formed in the valve body 16. Each of the gas inlet 20 and the gas exhaust outlet 22 opens from the inner chamber 18. The gas exhaust outlet 22 is connected to an outside of the storage tank 12.

More precisely, in the embodiment of Figures 1 and 2, the gas inlet 20 opens on the valve seat 30.

The plug 24 comprises a first 38 and a second 40 ends. In the first configuration of the safety valve 10, shown on Figure 1, the first end 38 is inserted in the gas exhaust outlet 22 and the second end 40 is situated outside of the valve body 16.

In an embodiment, the first end 38 is coated with a layer 42 of a hot-melt material, such as a metal. In the first configuration of the safety valve 10, shown on Figure 1, the layer 42 maintains the first end 38 fixed to the gas exhaust outlet 22.

In the second configuration of the safety valve 10, shown on Figure 2, the first end 38 of the plug 24 is out of the gas exhaust outlet 22.

The detection device 26 is coupled to the plug 24 and is configured for being not conductive when said plug is out of the gas exhaust outlet 22.

More specifically, the safety valve 10 and the detection device 26 are part of a safety system 50 for the transport vehicle 100. The safety system 50 and the transport vehicle 100 will be more specifically described below.

In the embodiment of Figures 1 and 2, the detection device 26 comprises : a support 52 ; a first 54 and a second 56 conductors ; and a contacting element 58. In the embodiment of Figures 1 and 2, the detection device 26 also comprises a contacting spring 60.

For example, each of the first 54 and second 56 conductors is a wire.

The support 52 is disposed on an external surface of the valve body 16, outside of the inner chamber 18 and near the gas exhaust outlet 22. A first end of each of the first 54 and the second 56 conductors is fixed to the support 52.

The contacting element 58 comprises a core 62 and a connector 64, made respectively of an electrically insulator material and of an electrically conductor material. The connector 64 is for example a metal pin inserted in the core 62, each end of the pin emerging from an outer surface of the core.

The contacting spring 60 extends between a first and a second ends, fixed respectively to the support 52 and to the contacting element 58.

In a compressed state of the contacting spring 60, shown on Figure 1, the contacting element 58 is in a first position relative to the support 52. In the first position of the contacting element 58, each end of the connector 64 is in contact with the first end, respectively, of the first 54 and of the second 56 conductor. Therefore, in the first position, the contacting element 58 ensures an electrical contact between the first 54 and the second 56 conductors.

In a relaxed state of the contacting spring 60, shown on Figure 2, the contacting element 58 is in a second position relative to the support 52. In the second position of the contacting element 58, the connector 64 is distant from the first 54 and second 56 conductors. Therefore, in the second position of the contacting element 58, the electrical contact between the first 54 and the second 56 conductors is interrupted.

In the first configuration of the safety valve 10, shown on Figure 1, the detection device 26 is in a deactivated conformation, corresponding to the plug 24 being inserted in the gas exhaust outlet 22.

More precisely, in the deactivated conformation, the contacting element 58 is in contact with the second end 40 of the plug 24. Said contact maintains the contacting spring 60 in the compressed state and the contacting element 58 in the first position.

In the second configuration of the safety valve 10, shown on Figure 2, the detection device 26 is in an activated conformation, corresponding to the plug 24 being out of the gas exhaust outlet 22.

More precisely, in the activated conformation, the contacting spring 60 is in the relaxed state and the contacting element 58 is in the second position.

The safety system 50 will now be described. The safety system 50 comprises : at least one safety valve 10 as described above ; and a monitoring device 70.

The monitoring device 70 is an electronic device, such as a computer or an electrotechnical device such as a contactor or a relay.

The detection device 26 of the at least one safety valve 10 is connected to the monitoring device 70. Preferably, a second end of each of the first 54 and second 56 conductors is connected to the monitoring device 70.

In a preferred embodiment, the safety system 50 is situated on board of the transport vehicle 100, said transport vehicle containing at least one, and preferably several storage tanks similar to the storage tank 12 described above. The or each storage tank 12 comprises a safety valve 10 as described above ; and the or each safety valve 10 is connected to the monitoring device 70. Preferably, the monitoring device 70 memorizes information regarding a location of the or of each safety valve 10 in the transport vehicle 100.

Preferably, the several storage tanks 12 are part of the storage tank system 13 described above.

A method for implementing the safety system 50 of the transport vehicle 100 will now be described.

In case of internal overpressure and/or over-temperature in a storage tank 12 or a group of storage tanks with a TPRD device installed on the storage tank system 13 storing dihydrogen, pressurized gaseous dihydrogen flows through the gas chamber 18 of the safety valve 10 of said storage tank 12. Under the increase of temperature and/or pressure in the inner chamber 18, the layer 42 of the first end 38 of the plug 24 softens and the plug 24 is ejected from the gas exhaust outlet 22, as shown on Figure 2.

By over-pressure, we means an increase of the pressure in the inner chamber 18, and in particular exceeding a preset pressure. More specifically, the preset pressure is over 300 bar, and for example over 650 bar, and more specifically sensibly equal to 700 bar.

By over-temperature, we means an increase of the temperature in the inner chamber 18, and in particular exceeding a preset temperature. The preset temperature is over 65°C, and for example over 100°C, and more specifically sensibly equal to 110°C.

As the plug 24 is ejected from the gas exhaust outlet 22, the contacting spring 60 of the detection device 26 relaxes and the electrical contact between the first 54 and the second 56 conductors is interrupted. Said interruption is detected by the monitoring device 70. Then, for example, the monitoring device 70 emits a warning message regarding the activation of the TPRD of the safety valve 10, preferably coupled with information about a location, in the transport vehicle 100, of the storage tank 12 comprising said safety valve 10. An operator is then able to check the safety conditions around said storage tank 12 or to initiate safety procedures.

Due to the detection of a TPRD activation, preferably along with a localization of said activated TPRD, the invention allows a quick intervention of operators in case of hazardous conditions in the vehicle. Due to the invention, it is not necessary to provide with a heat detector each safety valve having a TPRD.

## Claims

1. A safety valve (10) for a storage tank (12) able to store dihydrogen, the safety valve comprising : a valve body (16) ; an inner chamber (18), formed in the valve body ; a gas inlet (20) and a gas exhaust outlet (22), opening in the inner chamber (18) ; and a plug (24), inserted in the gas exhaust outlet (22) ; the plug (24) being configured for being ejected from the gas exhaust outlet (22) in case of an over-pressure and/or of an over-temperature in the inner chamber (18) ;
the safety valve also comprising a detection device (26) coupled to the plug (24), the detection device being configured for being activated when the plug is ejected from the gas exhaust outlet (22) ;
the safety valve being **characterized in that** :
- the detection device (26) comprises: a support (52) ; a first (54) and a second (56) conductors, fixed to the support ; and a contacting element (58), mobile relative to the support ;
- the detection device (26) is configured so that, in a deactivated conformation, corresponding to the plug (24) being inserted in the gas exhaust outlet (22), the contacting element (58) is in contact with the plug (24) and said contacting element is in a first position relative to the support (52) ; and in an activated conformation, corresponding to the plug (24) being out of the gas exhaust outlet (22), the contacting element (58) is in a second position relative to the support (52); and
- in the first position, the contacting element (58) ensures an electrical contact between the first (54) and the second (56) conductors ; and in the second position of the contacting element, the electrical contact between the first (54) and second (56) conductors is interrupted.

2. A safety valve according to claim 1, wherein the detection device (26) also comprises a compression spring (60) extending between a first and a second ends, fixed respectively to the support (52) and to the contacting element (58) ; and
wherein, in the deactivated conformation of the detection device (26), the compression spring (60) is in a compressed state ; and in the activated conformation of the detection device (26), the compression spring (60) is in a relaxed state.

3. A storage tank (12), configured for storing dihydrogen, said storage tank comprising a safety valve (10) according to claim 1 or 2.

4. A storage tank system (13) comprising : a storage tank (12) according to claim 3 ; and at least one pipe (14), the gas inlet (20) of the safety valve of the storage tank being connected to said at least one pipe (14).

5. A safety system (50) for a transport vehicle (100) containing at least one storage tank (12) for storing dihydrogen, the safety system comprising : at least one safety valve (10) according to claim 1 or 2 ; and a monitoring device (70), the detection device (26) of the at least one safety valve being connected to the monitoring device (70).

6. A safety system according to claim 5, also comprising at least one pipe (14) coupled to the at least one safety valve (10), the gas inlet (20) of said safety valve being connected to said pipe (14).

7. A transport vehicle (100) comprising a safety system (50) according to claim 5 or claim 6.

8. A transport vehicle (100) according to claim 7, wherein the monitoring device (70) of the safety system (50) memorizes information regarding a location of the at least one safety valve (10) in the transport vehicle.

## Patentansprüche

1. Sicherheitsventil (10) für einen Speichertank (12), welcher in der Lage ist, Di-Wasserstoff zu speichern, wobei das Sicherheitsventil umfasst: einen Ventilkörper (16); eine innere Kammer (18), welche in dem Ventilkörper gebildet ist; einen Gaseinlass (20) und einen Gasabgabeauslass (22), welche sich in der inneren Kammer (18) öffnen; und einen Stöpsel (24), welcher in den Gasabgabeauslass (22) eingesetzt ist; wobei der Stöpsel (24) dazu eingerichtet ist, von dem Gasabgabeauslass (22) im Fall eines Überdrucks und/oder einer Übertemperatur in der inneren Kammer (18) ausgestoßen zu werden;
wobei das Sicherheitsventil ebenfalls eine Detektionsvorrichtung (26) umfasst, welche mit dem Stöpsel (24) gekoppelt ist, wobei die Detektionsvorrichtung dazu eingerichtet ist, aktiviert zu werden, wenn der Stöpsel aus dem Gasabgabeauslass (22) ausgestoßen wird;
das Sicherheitsventil **dadurch gekennzeichnet, dass**:
- die Detektionsvorrichtung (26) umfasst: einen Träger (52); einen ersten (54) und einen zweiten (56) Leiter, welche an dem Träger befestigt sind; und ein Kontaktelement (58), welches bewegbar bezüglich des Trägers ist;
- die Detektionsvorrichtung (26) derart eingerichtet ist, dass in einer deaktivierten Konfiguration, welche dem entspricht, dass der Stöpsel (24) in dem Gasabgabeauslass (22) eingesetzt ist, das Kontaktelement (58) in Kontakt mit dem Stöpsel (24) ist und das Kontaktelement in einer ersten Position bezüglich des Trägers (52) ist; und in einer aktivierten Konfiguration, welche dem entspricht, dass der Stöpsel (24) außerhalb des Gasabgabeauslasses (22) ist, das Kontaktelement (58) in einer zweiten Position bezüglich des Trägers (52) ist; und
- in der ersten Position das Kontaktelement (58) einen elektrischen Kontakt zwischen den ersten (54) und den zweiten (56) Leitern sicherstellt; und in der zweiten Position des Kontaktelements der elektrische Kontakt zwischen den ersten (54) und zweiten (56) Leitern unterbrochen ist.

2. Sicherheitsventil nach Anspruch 1, wobei die Detektionsvorrichtung (26) ebenfalls eine Kompressionsfeder (60) umfasst, welche sich zwischen einem ersten und einem zweiten Ende erstreckt, welche an dem Träger (52) bzw. dem Kontaktelement (58) befestigt sind; und
wobei in der deaktivierten Konfiguration der Detektionsvorrichtung (26) die Kompressionsfeder (60) in einem komprimierten Zustand ist; und in der aktivierten Konfiguration der Detektionsvorrichtung (26) die Kompressionsfeder (60) in einem entspannten Zustand ist.

3. Speichertank (12), welcher zum Speichern von Di-Wasserstoff eingerichtet ist, wobei der Speichertank ein Sicherheitsventil (10) nach Anspruch 1 oder 2 umfasst.

4. Speichertank-System (13), umfassend: einen Speichertank (12) nach Anspruch 3; und wenigstens eine Leitung (14), wobei der Gaseinlass (20) des Sicherheitsventils des Speichertanks mit der wenigstens einen Leitung (14) verbunden ist.

5. Sicherheitssystem (50) für ein Transportfahrzeug (100), welches wenigstens einen Speichertank (12) zum Speichern von Di-Wasserstoff enthält, wobei das Sicherheitssystem umfasst: wenigstens ein Sicherheitsventil (10) nach Anspruch 1 oder 2; und eine Überwachungsvorrichtung (70), wobei die Detektionsvorrichtung (26) des wenigstens einen Sicherheitsventils mit der Überwachungsvorrichtung (70) verbunden ist.

6. Sicherheitssystem nach Anspruch 5, ebenfalls umfassend wenigstens eine Leitung (14), welche mit dem wenigstens einen Sicherheitsventil (10) gekoppelt ist, wobei der Gaseinlass (20) des Sicherheitsventils mit der Leitung (14) verbunden ist.

7. Transportfahrzeug (100), umfassend ein Sicherheitssystem (50) nach Anspruch 5 oder 6.

8. Transportfahrzeug (100) nach Anspruch 7, wobei die Überwachungsvorrichtung (70) des Sicherheitssystems Informationen hinsichtlich einer Position des wenigstens einen Sicherheitsventils (10) in dem Transportfahrzeug speichert.

## Revendications

1. Une vanne de sécurité (10) pour un réservoir de stockage (12) apte à stocker du dihydrogène, la vanne de sécurité comprenant : un corps de vanne (16) ; une chambre interne (18), formée dans le corps de vanne ; une entrée de gaz (20) et une sortie d'échappement de gaz (22), s'ouvrant dans la chambre interne (18) ; et un bouchon (24), inséré dans la sortie d'échappement de gaz (22) ; le bouchon (24) étant configuré pour être éjecté de la sortie d'échappement de gaz (22) en cas de surpression et/ou de surtempérature dans la chambre interne (18) ;
la vanne de sécurité comprenant également un dispositif de détection (26) couplé au bouchon (24), le dispositif de détection étant configuré pour être activé lorsque le bouchon est éjecté de la sortie d'échappement de gaz (22) ;
la vanne de sécurité étant **caractérisée en ce que** :
- le dispositif de détection (26) comprend : un support (52) ; un premier (54) et un second (56) conducteurs, fixés au support ; et un élément de contact (58), mobile par rapport au support ;
- le dispositif de détection (26) est configuré de sorte que, dans une configuration désactivée, correspondant à l'insertion du bouchon (24) dans la sortie d'échappement de gaz (22), l'élément de contact (58) se trouve en contact avec le bouchon (24) et ledit élément de contact se trouve dans une première position par rapport au support (52) ; et, dans une configuration activée, correspondant à la sortie du bouchon (24) de la sortie d'échappement de gaz (22), l'élément de contact (58) se trouve dans une seconde position par rapport au support (52) ; et
- dans la première position, l'élément de contact (58) assure un contact électrique entre les premier (54) et second (56) conducteurs ; et, dans la seconde position de l'élément de contact, le contact électrique entre les premier (54) et second (56) conducteurs est interrompu.

2. Une vanne de sécurité selon la revendication 1, dans laquelle le dispositif de détection (26) comprend également un ressort de compression (60) s'étendant entre une première et une seconde extrémités, fixé respectivement au support (52) et à l'élément de contact (58) ; et
dans laquelle, dans la configuration désactivée du dispositif de détection (26), le ressort de compression (60) se trouve dans un état comprimé ; et, dans la configuration activée du dispositif de détection (26), le ressort de compression (60) se trouve dans un état détendu.

3. Un réservoir de stockage (12), configuré pour stocker du dihydrogène, ledit réservoir de stockage comprenant une vanne de sécurité (10) selon la revendication 1 ou 2.

4. Un système de réservoir de stockage (13) comprenant : un réservoir de stockage (12) selon la revendication 3 ; et au moins un tuyau (14), l'entrée de gaz (20) de la vanne de sécurité du réservoir de stockage étant connectée audit au moins un tuyau (14).

5. Un système de sécurité (50) pour un véhicule de transport (100) contenant au moins un réservoir de stockage (12) pour stocker du dihydrogène, le système de sécurité comprenant : au moins une vanne de sécurité (10) selon la revendication 1 ou 2 ; et un dispositif de surveillance (70), le dispositif de détection (26) de l'au moins une vanne de sécurité étant connecté au dispositif de surveillance (70).

6. Un système de sécurité selon la revendication 5, comprenant également au moins un tuyau (14) couplé à l'au moins une vanne de sécurité (10), l'entrée de gaz (20) de ladite vanne de sécurité étant connectée audit tuyau (14).

7. Un véhicule de transport (100) comprenant un système de sécurité (50) selon la revendication 5 ou la revendication 6.

8. Un véhicule de transport (100) selon la revendication 7, dans lequel le dispositif de surveillance (70) du système de sécurité (50) mémorise des informations concernant un emplacement de l'au moins une vanne de sécurité (10) dans le véhicule de transport.
